## Europäisches Patentamt

## European Patent Office

## Office européen des brevets

(19)

(11) Veröffentlichungsnummer: **0 089 466
B1**

(12) **EUROPÄISCHE PATENTSCHRIFT**

(45) Veröffentlichungstag der Patentschrift:
08.05.85

(21) Anmeldenummer: 83100713.3

(22) Anmeldetag: 26.01.83

(51) Int. Cl.⁴: **C 02 F 3/20**, B 01 F 3/04

(54) Tauchbelüfter.

(30) Priorität: 22.03.82 DE 3210475

(43) Veröffentlichungstag der Anmeldung:
28.09.83 Patentblatt 83/39

(45) Bekanntmachung des Hinweises auf die Patenterteilung:
08.05.85 Patentblatt 85/19

(84) Benannte Vertragsstaaten:
AT DE FR GB IT NL SE

(56) Entgegenhaltungen:
AT - B - 359 931
US - A - 4 224 158

(73) Patentinhaber: BLUM, Albert, Scheiderhöhe,
D-5204 Lohmar 1 (DE)

(72) Erfinder: Bonn, Peter, Dipl.-Ing.,
Scheiderhöhe-Hammersch 7, D-5204 Lohmar 1 (DE)
Erfinder: Arnswald, Werner, Dipl.-Ing., Lindenweg 12,
D-5204 Lohmar-Heppenberg (DE)

(74) Vertreter: Patentanwälte Dipl.-Ing. W. Dahlke Dipl.-Ing.
H.-J. Lippert, Frankenforster Strasse 137,
D-5060 Bergisch Gladbach 3 (DE)

BUNDESDRUCKEREI BERLIN

**Beschreibung**

Die Erfindung betrifft einen Tauchbelüfter zum Belüften von Wasser, insbesondere von Schmutzwasser, Abwasser oder dergleichen mit mindestens einer Mischkammer, einer dieser vorgeschalteten Düse, die einen Wasserstrahl durch die Mischkammer hindurch erzeugt, einem in die Mischkammer mündenden Druckluftanschluß sowie mindestens einem aus der Mischkammer hinausführenden Ejektor.

Bekannte Tauchbelüfter der genannten Art sind in unterschiedlicher Größe und mit unterschiedlichen Leitungen als komplette Vorrichtungen auf dem Markt. Sämtliche Funktionsteile einschließlich Pumpe, Pumpenmotor, Gebläse, Gebläsemotor und dergleichen sind in die Vorrichtung integriert und müssen entsprechend an die Vorrichtung angepaßt sein.

Der Erfindung liegt die Aufgabe zugrunde, den vorrichtungstechnischen Aufwand eines Tauchbelüfters zu reduzieren und den Tauchbelüfter in bautechnischer Hinsicht variabler zu gestalten.

Erfindungsgemäß wird diese Aufgabe dadurch gelöst, daß vor der in die Mischkammer mündenden Düse eine Druckwassersammelkammer vorgesehen ist, die mit der Mischkammer eine separate Baueinheit bildet, daß die Druckwassersammelkammer auf der dem Ejektor gegenüberliegenden Seite einen Anschluß für Druckwasser aufweist und daß an der Mischkammer ein Anschluß für Druckluft angeordnet ist.

Derartige Baueinheiten lassen sich ohne weiteres an handelsübliche Pumpen und Gebläse anschließen und können durch Parallelschaltung auch zu größeren Einheiten zusammengesetzt werden.

Vorzugsweise ist der Druckwasseranschluß als genormte Flanschverbindung ausgebildet, so daß an die Baueinheit unmittelbar oder unter Zwischenschaltung eines Rohrsystems eine handelsübliche Tauchpumpe anschließbar ist.

Unter Zuhilfenahme handelsüblicher Rohrverbinder, wie Rohrkrümmer, Rohrabzweiger, Rohrkreuzungen und dergleichen können die Baueinheiten mit weiteren gleichen Baueinheiten zu größeren Anlagen beliebiger Form zusammengesetzt werden, beispielsweise zu einer runden Anlage, bei der die Ejektoren der Einheiten in alle Richtungen strahlen, oder zu einer langgestreckten Anlage, in der die Einheiten parallel nebeneinanderliegen.

Eine vorteilhafte Ausführungsform der Baueinheit weist zwei nebeneinanderliegende Mischkammern auf, deren vorgeschaltete Düse von der gemeinsamen Druckwasserkammer ausgehen. Die beiden Mischkammern können auch gemeinsam mit dem Druckluftanschluß in Verbindung stehen, so daß für beide Mischkammern lediglich ein Druckwasseranschluß und ein Druckluftanschluß vorhanden zu sein braucht.

Aus den beiden Mischkammern können Ejektoren unterschiedlicher Länge herausführen, so daß die Ausstoßzonen der beiden Ejektoren besser voneinander getrennt sind und der Wirkungsgrad dadurch höher liegt.

Unabhängig davon, ob die Ejektoren gleich lang oder unterschiedlich lang sind, können sie auch unter einem Winkel zueinander angeordnet sein, wobei die Achsen der Ejektoren in Ausstoßrichtung auseinanderlaufen. Durch diese winkelige Anordnung kann ebenfalls der Wirkungsgrad noch verbessert werden.

Der Druckluftanschluß ist zweckmäßig oben auf der Mischkammer bzw. auf den Mischkammern angeordnet und als genormte Verbindung ausgebildet, so daß die jeweilige Baueinheit unmittelbar oder unter Zwischenschaltung eines Rohrsystems an ein handelsübliches Gebläse angeschlossen werden kann.

Der Druckluftanschluß kann als Gewindebohrung ausgebildet sein.

Um die Vielseitigkeit des Anschlusses noch zu erhöhen, kann der Druckluftanschluß von einer Befestigungsplatte umgeben sein, so daß beliebige Anschlußstücke daran befestigt werden können. Vorzugsweise ist an der Befestigungsplatte ein mit einer seitlichen genormten Flanschverbindung versehener Aufsatz angeschraubt, so daß sich die Baueinheit auch bequem mit stationären Anlagen kombinieren läßt.

Die Erfindung ist in der Zeichnung beispielsweise veranschaulicht und im nachstehenden im einzelnen anhand der Zeichnung beschrieben.

Es zeigt

Fig. 1 eine Baueinheit gemäß der Erfindung,

Fig. 2 eine andere Ausführungsform der erfindungsgemäßen Baueinheit,

Fig. 3 den Einsatz der Baueinheit gemäß Fig. 1 in einer stationären Anlage und

Fig. 4 den Einsatz der Baueinheit gemäß Fig. 1 in einer mobilen, variablen Anlage.

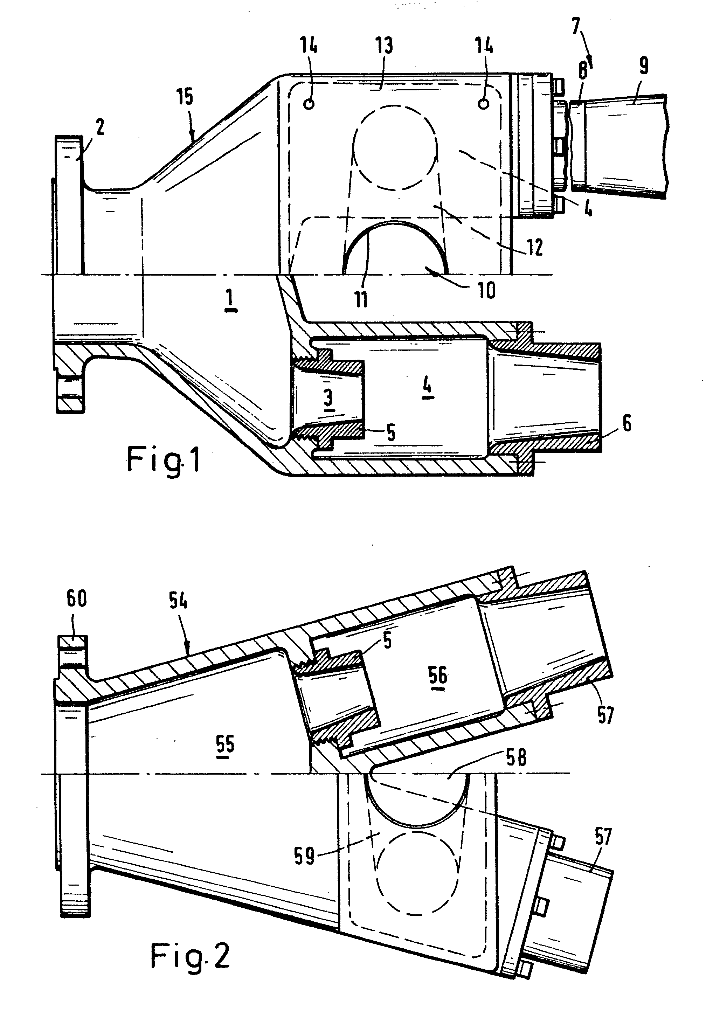

Bei dem in Figur 1 dargestellten Ausführungsbeispiel umfaßt die Baueinheit eine Druckwassersammelkammer 1 mit einem als genormte Flanschverbindung 2 ausgebildeten Druckwasseranschluß. Auf der der Flanschverbindung 2 gegenüberliegenden Seite weist die Druckwassersammelkammer zwei Auslaßöffnungen 3 auf, die je in eine Mischkammer 4 führen. In den Auslaßöffnungen sitzen Düsen 5, die das aus der Druckwassersammelkammer 1 kommende Druckwasser in Form eines Strahls durch die jeweilige Mischkammer 4 hindurchführen.

Am Ende der jeweiligen Mischkammer 4 ist ein Ejektor 6 bzw. 7 angeordnet, der das mit Luftblasen durchsetzte Wasser aus der Einheit herausstrahlt. Der Ejektor 6 ist als relativ kurze Düse ausgebildet, während der aus der anderen Mischkammer 4 herausführende Ejektor 7 ein relativ langgestrecktes Ejektorrohr 8 mit einer am Ejektorausgang vorgesehenen Erweiterung 9 aufweist. Durch diese Maßnahme werden die Ausstoßzonen aus den beiden parallel geschalteten Ejektoren voneinander getrennt, so daß es zwischen den beiden Ausstoßzonen nicht oder kaum zu der nachteiligen Blasenkoaleszenz kom-

men kann. Durch diese Maßnahme ist ein guter Wirkungsgrad erzielbar.

Über den beiden Mischkammern 4 ist ein gemeinsamer Druckluftanschluß 10 vorgesehen, der als Gewindebohrung 11 ausgebildet ist und über seitlich schräg nach unten verlaufende Kanäle 12 mit den beiden Mischkammern 4 in Verbindung steht.

Der Einsatz einer solchen Baueinheit ist sehr vielfältig. Die einfachste Form der Anwendung besteht darin, daß man an den als Flanschverbindung 2 ausgebildeten Druckwasseranschluß eine mit einem entsprechenden Gegenflansch versehene handelsübliche Tauchpumpe anschließt. Gleichzeitig muß in die Gewindebohrung des Druckluftanschlusses 10 eine entsprechende Druckluftanschlußleitung eingeschraubt werden. Dieses einfachste Anwendungsbeispiel, bei dem die Baueinheit sowohl stationär als auch mobil verwendet werden kann, ist in der Zeichnung nicht dargestellt.

Um den Anwendungsbereich der Baueinheit noch zu vergrößern, ist über den beiden Mischkammern 4 in der Ebene des Druckluftanschlusses 10 eine Befestigungsplatte 13 angeordnet, die rechteckig ausgebildet ist und sich über die gesamte Breite der Einheit erstreckt. Die Befestigungsplatte 13 ist mit mehreren über ihren Umfang verteilt angeordneten Gewindebohrungen 14 versehen, so daß auf die Befestigungsplatte andere Anschlußteile zur Druckluftzuführung anschraubbar sind.

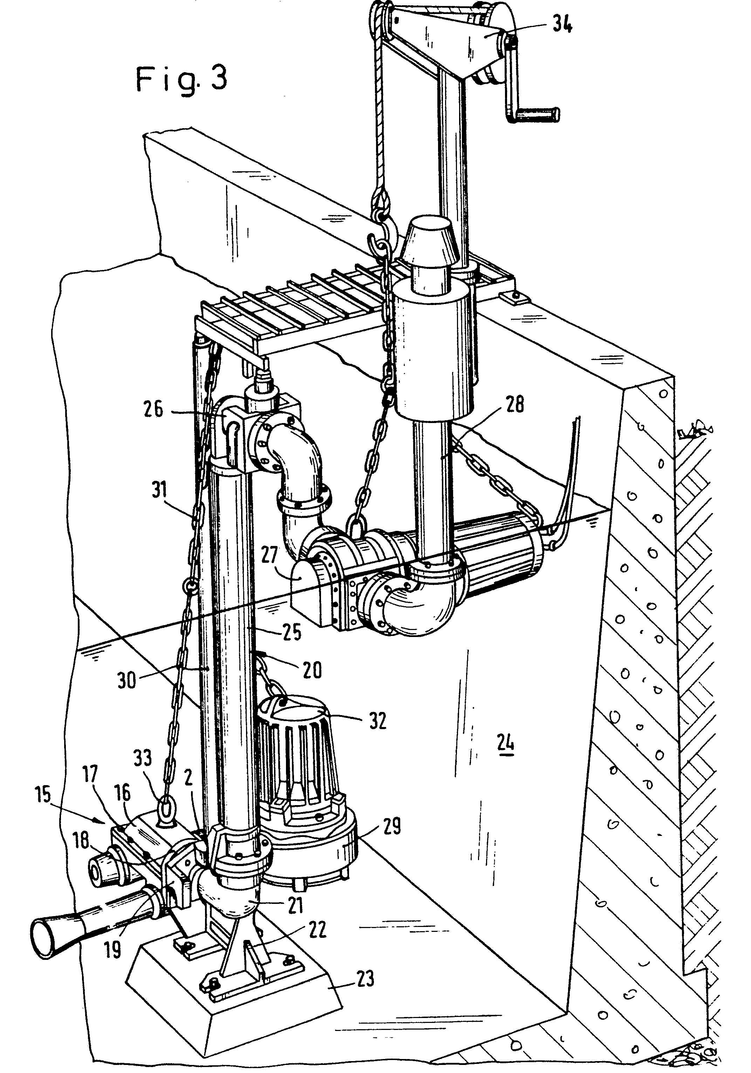

In Fig. 3 der Zeichnung ist ein Anwendungsbeispiel für die Baueinheit gemäß Fig. 1 veranschaulicht, bei dem die Baueinheit Teil einer stationären Anlage ist.

Die in Fig. 3 mit der Positionszahl 15 gekennzeichnete Baueinheit ist dabei mit einem Aufsatz 16 versehen, der mit Hilfe von Schrauben 17 auf die Befestigungsplatte 13 geschraubt ist. An einer Seite ist der Aufsatz 16 mit einem Flansch 18 versehen, an dem eine Halterung 19 zum Aufhängen der Einheit 15 auf dem Fuß eines Druckluftzuführungsrohrs 20 angebracht ist. Das Druckluftzuführungsrohr 20 verläuft in seinem unteren Bereich 21 horizontal und ist mit Hilfe eines angeschweißten Gestells 22 an einem stationären Fundament 23 befestigt, das am Boden eines Wasserbeckens 24 angeordnet ist. An den horizontalen Bereich 21 des Druckluftzuführungsrohrs 20 schließt sich ein vertikaler Bereich 25 an, der bis über den Wasserspiegel hinausragt und dort wieder in die Horizontale abgekrümmt ist. An den abgekrümmten Bereich ist oberhalb des Wasserspiegels über eine Halterung 26, die ähnlich aufgebaut ist wie die untere Halterung 19, das Auslaßrohr eines unterhalb des Wasserspiegels angeordneten Gebläses 27 angeschlossen, das die Luft über eine über den Wasserspiegel hinausragende Saugleitung 28 ansaugt und über das Druckluftzuführungsrohr 20 der Einheit 15 zuführt.

An die Flanschverbindung 2 der Einheit 15 ist eine handelsübliche Tauchpumpe 29 angeflanscht, die gemeinsam mit der Einheit 15 ein zusammenhängendes Bauteil bildet, welches außerhalb des Wasserbeckens 24 montiert und mit Hilfe einer an sich bekannten Einrohrführung, von der in der Anlage lediglich das Führungsrohr 30 dargestellt ist, in das Wasser hinabgeführt und mit Hilfe der Halterung 19 auf den Fuß des Druckluftzuführungsrohrs 20 dicht aufgesetzt wird.

Zum Absenken und Anheben des aus der Baueinheit 15 und der Pumpe 29 bestehenden Bauteils dient eine Haltekette 31 mit zwei Befestigungsenden, von denen das eine Ende an dem Motor 32 der Pumpe 29 und das andere Ende an einer oben auf dem Aufsatz 16 der Baueinheit 15 vorgesehenen Öse 33 befestigt ist. Die Heb- und Senkbewegung erfolgt mit Hilfe eines Krans 34, der gleichzeitig auch zum Anheben und Absenken des Gebläses 27 verwendet wird.

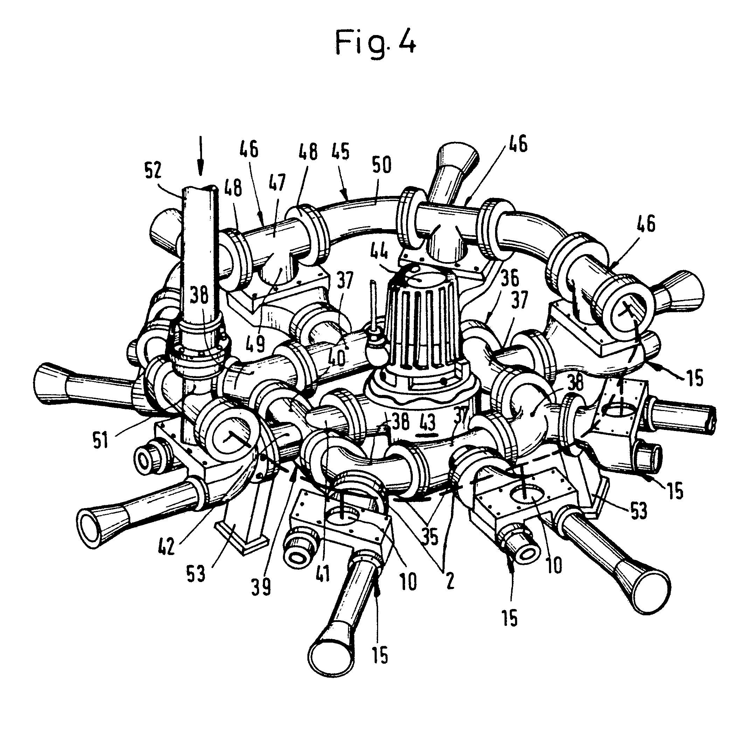

In Fig. 4 der Zeichnung ist eine mobile Belüfteranlage dargestellt, in der acht Belüfter-Baueinheiten 15 miteinander kombiniert sind. Die Baueinheiten 15 sind kreisförmig in gleichen Winkelabständen angeordnet, wobei die Verbindungsflansche 2 der Baueinheiten 15 genau zum Mittelpunkt des gedachten Kreises weisen. Die acht Verbindungsflansche sind an entsprechende Gegenflansche 35 einer inneren Ringleitung 36 angeschlossen. Diese ist aus einzelnen Rohrabzweigern zusammengesetzt, und zwar aus drei Rohrabzweigern 37 mit geradlinig durchlaufendem Hauptrohr, vier Rohrabzweigern 38 mit um 90° gebogenem Hauptrohr sowie einer Rohrkreuzung 39 mit geradlinigem Hauptrohr 40 und zwei senkrecht zu dem Hauptrohr 40 vorgesehenen Stutzen 41 und 42, wobei an dem nach außen gerichteten Stutzen 42 eine der Belüfter-Baueinheiten 15 befestigt ist, während an den nach innen gerichteten Stutzen 41 eine handelsübliche Tauchpumpe 43 angeschlossen ist, die mit einem Elektromotor 44 betrieben wird.

Durch die Tauchpumpe 43 wird die innere Ringleitung 36 über den an der Rohrkreuzung 39 sitzenden nach innen gerichteten Stutzen 41 mit Druckwasser beaufschlagt, wobei sich das Druckwasser über die gesamte Ringleitung 36 verteilt und von dort in die einzelnen Druckwassersammelkammern 1 der acht Belüftereinheiten 15 gelangt.

Oberhalb der Druckluftanschlüsse 10 der Baueinheiten 15 verläuft eine Druckluft-Ringleitung 45, die ebenfalls aus einzelnen handelsüblichen Rohrverbindern bestehen. Jeder Belüfter-Baueinheit 15 ist ein Rohrabzweiger 46 zugeordnet, der ein geradliniges Hauptrohr 47 mit beidseitigen Endflanschen 48 sowie einen Abzweigstutzen 49 aufweist, der am Ende mit Gewinde versehen ist, welches in den jeweiligen mit Gewinde versehenen Druckluftanschluß 10 der Baueinheit 15 eingeschraubt ist. Die einzelnen Rohrabzweiger 46 sind über Rohrkrümmer 50 zu der Ringleitung 45 zusammengeschlossen.

Mindestens einer der Rohrabzweiger 46 ist mit einem zweiten, in entgegengesetzter Richtung weisenden Abzweigstutzen 51 versehen, an welchen ein von einem in der Zeichnung nicht dargestellten Gebläse kommendes Druckluftzuführungsrohr 52 angeschlossen ist.

Mit Hilfe von kurzen Standbeinen 53, die an den Rohrkrümmern der inneren Ringleitung 36 befestigt sind, kann die Anlage auf dem Boden eines zu belüftenden Wasserbeckens aufgestellt werden.

Mit Hilfe der in Figur 4 dargestellten Bauteile lassen sich verschiedenste Formen von Belüftungsanlagen in runder, ovaler, geradliniger oder sonstiger Form zusammensetzen.

Anstelle der Belüfter-Baueinheiten 15, die in Fig. 1, 3 und 4 dargestellt sind, kann auch eine Baueinheit 54 verwendet werden, wie sie in Fig. 2 dargeselt ist. Die Baueinheit 54 entspricht in allen Funktionsteilen der in Figur 1 im einzelnen dargestellten Baueinheit 15. Lediglich die äußere Form ist abweichend von der Baueinheit 15 gestaltet. An die Druckwasserkammer 55 schließen sich zwei rohrförmige Mischkammern 56 an, die in einem Winkel von ca. 30° zueinander geneigt sind, so daß auch die beiden sich an die Mischkammern 56 anschließenden Ejektoren 57 in dem selben Winkel zueinander geneigt sind, und zwar in der Weise, daß sich die Mittelachsen in Ausstoßrichtung voneinander entfernen.

Auch die Baueinheit 54 weist an ihrer Oberseite einen mittigen Druckluftanschluß 58 auf, der über Kanäle 59 mit den Mischkammern 56 verbunden ist.

Die beiden Ejektoren 57 sind bei dem in Figur 2 dargestellten Ausführungsbeispiel gleich lang ausgebildet. Es wäre jedoch auch möglich, ebenso wie bei dem in Figur 1 dargestellten Ausführungsbeispiel unterschiedlich lange Ejektoren zu verwenden. Allerdings ist der Wirkungsgrad der Belüfter-Baueinheit 54 aufgrund der voneinander weggeneigten Ejektoren bereits relativ gut, da auch hier die Ausstoßzonen der Ejektoren voneinander getrennt sind, so daß zwischen den beiden Ausstoßzonen keine Blasenkoaleszenz auftreten kann.

Auf der den Ejektoren 57 gegenüberliegenden Seite ist die Baueinheit 54 mit einem Verbindungsflansch 60 versehen, der in gleicher Weise ausgebildet ist wie der Verbindungsflansch 2 bei dem in Figur 1 dargestellten Ausführungsbeispiel, so daß die beiden Baueinheiten ohne weiteres gegeneinander austauschbar sind.

## Patentansprüche

1. Tauchbelüfter zum Belüften von Wasser, insbesondere von Schmutzwasser, Abwasser oder dergleichen, mit mindestens einer Mischkammer, einer dieser vorgeschalteten Düse, die einen Wasserstrahl durch die Mischkammer hindurch erzeugt, einem in die Mischkammer mündenden Druckluftanschluß sowie mindestens einem aus der Mischkammer hinausführenden Ejektor, dadurch gekennzeichnet, daß vor der in die Mischkammer (4; 56) mündenden Düse (5) eine Druckwassersammelkammer (1; 55) vorgesehen ist, die mit der Mischkammer eine separate Baueinheit (15; 54) bildet, daß die Druckwassersammelkammer (1; 55) auf der dem Ejektor (6, 9; 57) gegenüberliegenden Seite einen Anschluß (2; 60) für Druckwasser aufweist und daß an der Mischkammer (4; 56) ein Anschluß (10; 58) für Druckluft angeordnet ist.

2. Tauchbelüfter nach Anspruch 1, dadurch gekennzeichnet, daß der Druckwasseranschluß als genormte Flanschverbindung (2; 60) ausgebildet ist.

3. Tauchbelüfter nach Anspruch 1 oder 2, dadurch gekennzeichnet, daß an die Baueinheit (15; 54) unmittelbar oder unter Zwischenschaltung eines Rohrsystems eine handelsübliche Tauchpumpe (29; 43) anschließbar ist.

4. Tauchbelüfter nach einem der Ansprüche 1 bis 3, dadurch gekennzeichnet, daß die Baueinheit (15; 54) mit mehreren gleichen Baueinheiten unter Zuhilfenahme handelsüblicher Rohrverbinder (37, 38, 46, 50) zu einer größeren Anlage beliebiger Form zusammensetzbar ist.

5. Tauchbelüfter nach einem der Ansprüche 1 bis 4, dadurch gekennzeichnet, daß die Baueinheit (15, 54) zwei nebeneinanderliegende Mischkammern (4; 56) aufweist, deren vorgeschaltete Düsen (5) von der gemeinsamen Druckwassersammelkammer (1; 55) ausgehen.

6. Tauchbelüfter nach Anspruch 5, dadurch gekennzeichnet, daß beide Mischkammern (4; 56) gemeinsam mit dem Druckluftanschluß (10; 58) in Verbindung stehen.

7. Tauchbelüfter nach Anspruch 5 oder 6, dadurch gekennzeichnet, daß aus den Mischkammern (4) Ejektoren (6, 9) unterschiedlicher Länge herausführen.

8. Tauchbelüfter nach einem der Ansprüche 5 bis 7, dadurch gekennzeichnet, daß die Ejektoren (57) unter einem Winkel zueinander angeordnet sind, wobei die Achsen der Ejektoren in Ausstoßrichtung auseinanderlaufen.

9. Tauchbelüfter nach einem der Ansprüche 1 bis 8, dadurch gekennzeichnet, daß der Druckluftanschluß (10; 58) oben auf der Mischkammer bzw. den Mischkammern (4; 56) angeordnet und als genormte Verbindung ausgebildet ist.

10. Tauchbelüfter nach Anspruch 9, dadurch gekennzeichnet, daß der Druckluftanschluß (10; 58) als Gewindebohrung ausgebildet ist.

11. Tauchbelüfter nach Anspruch 9 oder 10, dadurch gekennzeichnet, daß der Druckluftanschluß (10; 58) von einer Befestigungsplatte (13) umgeben ist.

12. Tauchbelüfter nach Anspruch 11, dadurch gekennzeichnet, daß an die Befestigungsplatte (13) ein mit einer seitlichen genormten Flanschverbindung (18) versehener Aufsatz (16) angeschraubt ist.

## Claims

1. An immersion aerator for aerating water, particularly waste water, sewage, etc., having at least one mixing chamber, a nozzle upstream thereof which generates a water jet through the mixing chamber, a pressurized air connection issuing into the mixing chamber and at least one ejector leading out of the mixing chamber, wherein upstream of the nozzle (5) issuing into the mixing chamber (4; 56) a pressurized water storage chamber (1; 55) is provided which forms a separate subassembly (15; 54) with the mixing chamber, whilst the pressurized water storage chamber (1; 55) exhibits a connection (2; 60) for pressurized water on the side opposite the ejector (6, 9; 57) and a connection (10; 58) for pressurized air is arranged on the mixing chamber (4; 56).

2. An immersion aerator as claimed in claim 1, wherein the pressurized water connection is constructed as a standard flange joint (2; 60).

3. An immersion aerator as claimed in claim 1 or 2, wherein a customary commercial immersion pump (29; 43) is connectable to the subassembly (15; 54) directly or with the interposition of a pipe system.

4. An immersion aerator as claimed in any of claims 1 to 3, wherein the subassembly (15; 54) is assemblable with a plurality of identical subassemblies with the assistance of customary commercial pipe connectors (37, 38, 46, 50) to form a larger installation of anydesired shape.

5. An immersion aerator as claimed in any of claims 1 to 4, wherein the subassembly (15, 54) exhibits two juxtaposed mixing chambers (4; 56), the upstream nozzles (5) of which depart form the common pressurized water storage chamber (1; 55).

6. An immersion aerator as claimed in Claim 5, wherein both mixing chambers (4; 56) communicate in common with the pressurized air connection (10; 58).

7. An immersion aerator as claimed in claim 5 or 6, wherein ejectors (6, 9) of different length lead out of the mixing chambers (4).

8. An immersion aerator as claimed in any of claims 5 to 7, wherein the ejectors (57) are arranged mutually at an angle, whilst the axes of the ejectors diverge in the discharge direction.

9. An immersion aerator as claimed in any of claims 1 to 8, wherein the pressurized air connection (10; 58) is arranged on top of the mixing chamber or mixing chambers (4; 56) and is constructed as a standard joint.

10. An immersion aerator as claimed in claim 9, wherein the pressurized air connection (10; 58) is constructed as a tapped bore.

11. An immersion aerator as claimed in claim 9 or 10, wherein the pressurized air connection (10; 58) is surrounded by a mounting plate (13).

12. An immersion aerator as claimed in claim 11, wherein an attachment (16) provided with a lateral standard flange joint (18) is screwed onto the mounting plate (13).

## Revendications

1. Aérateur immergé pour l'aérage d'eau, en particulier d'eaux boueuses, d'eaux d'égout ou similaires, comprenant au moins une chambre de mélange, une tuyère placée en amont de celle-ci et produisant un jet d'eau à travers la chambre de mélange, un raccord d'air comprimé débouchant dans la chambre de mélange et au moins un éjecteur qui sort de la chambre de mélange, caractérisé en ce qu'il est prévu, en amont de la tuyère (5) qui débouche dans la chambre de mélange (4; 56), une chambre collectrice d'eau sous pression (1; 55) qui forme une unité de construction séparée (15; 54) avec la chambre de mélange, en ce que la chambre collectrice d'eau sous pression (1; 55) présente, du côté opposé à l'éjecteur (6, 9; 57), un raccord (2; 60) pour l'eau sous pression et en ce qu'il est disposé, au niveau de la chambre de mélange (4; 56), un raccord (10; 58) pour l'air comprimé.

2. Aérateur immergé selon la revendication 1, caractérisé en ce que le raccord pour l'eau sous pression est réalise sous forme de raccord à bride normalisé (2; 60).

3. Aérateur immergé selon la revendication 1 ou 2, caractérisé en ce qu'une pompe submersible du commerce (29; 43) peut être raccordée à l'unité de construction (15; 54), directement ou par l'intermédiaire d'une tuyauterie.

4. Aérateur immergé selon l'une quelconque des revendications 1 à 3, caractérisé ence que l'unité de construction (15; 54) peut être réuni à plusieurs unités de construction semblables, à l'aide de raccords de tuyaux du commerce (37, 38, 46, 50), pour former de plus grandes installations de n'importe quelle forme.

5. Aérateur immergé selon l'une quelconque des revendications 1 à 4, caractérisé en ce que l'unité de construction (15; 54) comporte deux chambres de mélange (4; 56) disposées côte à côte, dont les tuyères (5) placées en amont partent de la chambre collectrice d'eau sous pression commune (1; 55).

6. Aérateur imergé selon la revendication 5, caractérisé en ce que les deux chambres de mélange (4; 56) sont en communication en commun avec le raccord d'air comprimé (10; 58).

7. Aérateur imergé selon la revendication 5 ou 6, caractérisé en ce que des éjecteurs (6, 9) de longueurs différentes sortent des chambres de mélange (4).

8. Aérateur immergé selon l'une quelconque des revendications 5 à 7, caractérisé en ce que les éjecteurs (57) sont disposés de manière à former un angle entre elles, les axes des éjecteurs divergeant dans la direction de l'éjection.

9. Aérateur immergé selon l'une quelconque des revendications 1 à 8, caractérisé en ce que le raccord d'air comprimé (10; 58) est disposé en haut sur la chambre de mélange ou les chambres de mélange (4; 56) et est réalisé sous forme de jonction normalisée.

10. Aérateur immergé selon la revendications 9, caractérisé en ce que le raccord d'air comprimé (10; 58) est réalisé sous forme de forure taraudée.

11. Aérateur immergé selon la revendication 9 ou 10, caractérisé en ce que le raccord d'air comprimé (10; 58) est entouré d'une plaque de fixation (13).

12. Aérateur immergé selon la revendication 11, caractérisé en ce qu'un chapeau (16) muni d'un raccord à bride normalisé (18) sur le côté est fixé par vissage à la plaque de fixation (13).

Fig.1

Fig.2

# Fig. 3

# Fig. 4